# EUROPEAN PATENT APPLICATION

(11) **EP 4 418 344 A1**
(43) Date of publication of application: **21.08.2024**
(21) Application number: 24156961.5
(22) Date of filing: 09.02.2024
(51) Int. Cl.: H01M 4/131, H01M 4/134, H01M 4/36, H01M 4/38, H01M 4/46, H01M 4/48, H01M 4/505, H01M 4/525, H01M 4/587, H01M 10/0525

(54) **LITHIUM SECONDARY BATTERY**

(30) Priority: 10.02.2023 KR 20230018061
(71) Applicant: SK On Co., Ltd., Seoul 03161 (KR)
(72) Inventor: YOOK, Seung Hyun, 34124 Daejeon (KR); KIM, Moon Sung, 34124 Daejeon (KR); RYU, Sang Baek, 34124 Daejeon (KR); PARK, Da Hye, 34124 Daejeon (KR); JANG, Hwan Ho, 34124 Daejeon (KR); HAN, Jun Hee, 34124 Daejeon (KR); KIM, Hyo Mi, 34124 Daejeon (KR); BANG, Sang In, 34124 Daejeon (KR); CHUNG, Da Bin, 34124 Daejeon (KR)
(74) Representative: Stolmár & Partner Patentanwälte PartG mbB

(57) **Abstract**

A lithium secondary battery is disclosed.

In some implementations, the lithium secondary battery includes a positive electrode including a positive electrode active material including lithium metal oxide including nickel (Ni) and a negative electrode including a negative electrode active material including a silicon-based active material, wherein the positive electrode active material includes 10 wt% or more of lithium metal oxide in the form of single particles based on a total weight of the positive electrode active material, and the negative electrode active material includes 1 to 15 wt% of the silicon-based active material based on a total weight of the negative electrode active material.

## Description

### TECHNICAL FIELD

The technology and implementations disclosed in this patent document generally relate to a lithium secondary battery.

### BACKGROUND

As interest in environmental issues has grown recently, exhaust gases emitted from vehicles using fossil fuels, such as gasoline or diesel, have been identified as one of the main causes of air pollution, and electric vehicles (EVs), hybrid electric vehicles (HEV), and the like, have been extensively studied are as alternatives.

Lithium secondary batteries with high discharge voltage and power stability have mainly been used as a power source for EVs, HEVs, and the like. In addition, as the need for secondary batteries with high capacity and high energy density has increased, development and research into positive and negative electrodes having high energy density has been actively underway.

Recently, in order to implement secondary batteries with high capacity and high energy density, a positive electrode active material with a high nickel (Ni) content having high energy density has been applied to positive electrodes, and a silicon-based negative electrode active material with a higher discharge capacity, as compared to graphite, has been applied to negative electrodes.

However, positive electrode active materials with a high nickel content cause a large amount of gas at high temperatures, and the amount of gas occurrence further increases due to cracks occurring during continuous charging and discharging. In addition, the silicon-based negative electrode active material has a very high expansion and contraction rate of a volume during charging and discharging, which causes cracks to occur, thereby reducing lifespan characteristics of secondary batteries.

### SUMMARY

The disclosed technology may be implemented in some embodiments to provide a lithium secondary battery with improved lifespan characteristics, storage characteristics, and stability.

In some embodiments of the disclosed technology, a lithium secondary battery includes: a positive electrode including a positive electrode active material including lithium metal oxide including nickel (Ni); and a negative electrode including a negative electrode active material including a silicon-based active material, wherein the positive electrode active material includes 10 wt% or more of lithium metal oxide in the form of single particles based on a total weight of the positive electrode active material, and the negative electrode active material includes 1 to 15 wt% of the silicon-based active material based on a total weight of the negative electrode active material.

The lithium metal oxide may be represented by Chemical Formula 1 below:

[Chemical Formula 1] LiₓNiₐCo_{b}Mn_{c}M_{d}O_{2+y}

(In Chemical Formula 1, M is one or more selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, wherein 0.8≤x≤1.5, -0.1≤y≤0.1, 0.83≤a≤1, 0≤b≤0.1, 0≤ c≤0.1, 0≤d≤0.1, and a+b+c+d=1).

The lithium metal oxide may be coated or doped with at least one selected from the group consisting of Al, Ti, Ba, Zr, Si, B, Mg, P, V, W, alloys thereof, and oxides thereof.

The silicon-based active material may include SiOx (0<x<2) or Si-C complex.

The negative electrode active material may include 7 to 12 wt% of the silicon-based active material based on the total weight of the negative electrode active material.

The negative electrode active material may further include a carbon-based active material.

The lithium secondary battery may further include: a separator interposed between the positive electrode and the negative electrode.

In some embodiments of the disclosed technology, a lithium secondary battery includes: a positive electrode including lithium metal oxide in the form of single particles and including a positive electrode active material represented by Chemical Formula 1 below; and a negative electrode including a negative electrode active material including a silicon-based active material, wherein the negative electrode active material includes 1 to 15 wt% of the silicon-based active material based on a total weight of the negative electrode active material.

[Chemical Formula 1] LiₓNiₐCo_{b}Mn_{c}M_{d}O_{2+y}

(In Chemical Formula 1, M is one or more selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, wherein 0.8≤x≤1.5, -0.1≤y≤0.1, 0.83≤a≤1, 0≤b≤0.1, 0≤ c≤0.1, 0≤d≤0.1, and a+b+c+d=1).

The positive electrode active material may include 10 wt% or more of lithium metal oxide in the form of single particles based on a total weight of the positive electrode active material.

The lithium metal oxide may be coated or doped with at least one selected from the group consisting of Al, Ti, Ba, Zr, Si, B, Mg, P, V, W, alloys thereof, and oxides thereof.

The silicon-based active material may include SiOx (0<x<2) or Si-C complex.

The negative electrode active material may include 7 to 12 wt% of the silicon-based active material based on the total weight of the negative electrode active material.

The lithium secondary battery may further include: a separator interposed between the positive electrode and the negative electrode.

### DETAILED DESCRIPTION

Hereinafter, various embodiments according to the present disclosure will be described. However, the embodiments may be modified into various other forms, and the scope is not limited to the embodiments described below.

A lithium secondary battery according to the present disclosure may include a positive electrode, a negative electrode, and a separator interposed between the positive electrode and the negative electrode.

### Positive electrode

The positive electrode may include a positive electrode current collector and a positive electrode mixture layer formed on at least one surface of the positive electrode current collector.

The positive electrode mixture layer may include a positive electrode active material, a positive conductive material, and a positive electrode binder.

### Positive electrode active material

The positive electrode active material may include lithium metal oxide including nickel (Ni).

In embodiments, the lithium metal oxide may include about 83 mol% or more of nickel with respect to the total number of moles of metal atoms. Since the positive electrode active material includes a high content of nickel, which has a high capacity, a positive electrode to which the positive electrode active material is applied may have high capacity and high energy density.

In embodiments, the lithium metal oxide may be represented by Chemical Formula 1 below.

[Chemical Formula 1] LiₓNiₐCo_{b}Mn_{c}M_{d}O_{2+y}

In Chemical Formula 1, M is one or more selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr, and 0.8≤x≤1.5, -0.1≤y≤0.1, 0.83≤a≤1, 0≤b≤0.1, 0≤ c≤0.1, 0≤d≤0.1, and a+b+c+d=1.

In an embodiment, the lithium metal oxide may be, for example, LiNi_{0.88}Co_{0.09}Mn_{0.03}O₂, LiNi_{0.94}Co_{0.05}Mn_{0.01}O₂, or a mixture thereof.

In addition, the lithium metal oxide may be coated or doped with at least one selected from the group consisting of Al, Ti, Ba, Zr, Si, B, Mg, P, V, W, alloys thereof, and oxides thereof. Accordingly, structural stability, thermal stability, and electronic conductivity of the lithium metal oxide may be improved, and at least one selected from the group may serve as a physical shield, thereby reducing side reactions of the lithium metal oxide with an electrolyte solution.

Meanwhile, since the lithium metal oxide includes nickel, a large amount of oxygen in the lithium metal oxide may be oxidized in a charged state and a large amount of oxidized oxygen may react with the electrolyte solution to cause gas at high temperatures. In embodiments, the gas include carbon dioxide (CO₂), carbon monoxide (CO), methane (CH4), ethane (C₂H₆), propane (C₃H₈), propene (C₃H₆), acetylene (C₂H₂), ethylene (C₂H₄), and hydrogen (H₂).

The positive electrode active material may include lithium metal oxide in the form of single particles or lithium metal oxide in the form of secondary particles. Here, the single particle form may refer to, for example, excluding a secondary particle which is substantially a single particle formed as a plurality of primary particles (e.g., exceeding ten particles) are assembled or aggregated. However, the single particle form does not exclude a substantially monolithic form (for example, a structure converted into a single particle) formed as two to ten single particles are attached or closely adhered to each other.

Meanwhile, in the case of the lithium metal oxide in the form of secondary particles, cracks may occur during charging and discharging of the secondary battery, which may cause a new interface to be formed in the lithium metal oxide, thereby generating a larger amount of the gas. Meanwhile, the silicon-based active material included in the negative electrode active material, to be described below, may consume carbon dioxide included in the gas during charging and discharging of a secondary battery to form a solid electrolyte interface (SEI) layer on the surface of the negative electrode. That is, the lithium metal oxide in the form of secondary particles generates more gas than the amount of gas consumed by the silicon-based active material during charging and discharging of the secondary battery, causing swelling of the secondary battery and venting of the gas, which may deteriorate lifespan characteristics, storage characteristics, and stability of the secondary battery.

However, the lithium metal oxide in the form of single particles is not cracked during charging and discharging of the secondary battery, and as a result, the gas occurrence may be reduced to prevent the swelling phenomenon of the secondary battery, etc., thereby improving the lifespan characteristics, storage characteristics, and stability of the secondary battery.

In an embodiment, the positive electrode active material may include about 10 wt% or more of lithium metal oxide in the form of single particles with respect to the total weight of the positive electrode active material. If the positive electrode active material includes less than about 10 wt% of lithium metal oxide in the form of single particles with respect to the total weight of the positive electrode active material, the positive electrode active material may include a large amount of lithium metal oxide in the form of secondary particles and a large amount of gas may occur due to cracks in the lithium metal oxide in the form of secondary particles when the secondary battery is charged or discharged.

In an embodiment, the positive electrode active material may be about 95 to about 99.5 wt% based on the total weight of the positive electrode mixture layer.

### Positive electrode conductive material

The positive electrode conductive material is used to provide conductivity to the positive electrode, and may be used without limitation as long as it is commonly used in secondary batteries. The positive electrode conductive material may be, for example, carbon-based materials, such as natural graphite, artificial graphite, carbon black, acetylene black, Ketjen black, and carbon fiber, metal-based materials, such as metal powder, such as copper, nickel, aluminum, and silver, or metal fibers, or a conductive material including a conductive polymer, such as a polyphenylene derivative, or a mixture thereof.

In an embodiment, the positive electrode conductive material may be about 0.1 to about 2.5 wt% based on the total weight of the positive electrode mixture layer.

### Positive electrode binder

The positive electrode binder may not be particularly limited as long as it is a component assisting in binding the positive electrode active material, the positive electrode conductive material, etc., and binding to the positive electrode current collector. The positive electrode binder may include, for example, at least one selected from the group consisting of polyvinyl alcohol (PVA), carboxymethyl cellulose (CMC), starch, hydroxypropyl methylcellulose (HPMC), polyvinyl pyrrolidone, polytetrafluoroethylene (PTFE), polyethylene, polypropylene, ethylene propylene diene monomer (EPDM), styrene-butadiene rubber (SBR), non-aromatic hydrocarbon-based butadiene rubber and fluorine-based rubber.

In an embodiment, the positive electrode binder may be about 0.5 to about 3 wt% based on the total weight of the positive electrode mixture layer.

### Positive electrode current collector

The positive electrode current collector is commonly used in the manufacturing of the positive electrode of secondary batteries, and may be used without particular limitations as long as it has conductivity without causing chemical changes within secondary batteries. As the positive electrode current collector, a plate, foil, and the like, including, for example, indium (In), copper (Cu), magnesium (Mg), stainless steel, titanium (Ti), iron (Fe), cobalt (Co), nickel (Ni), and zinc (Zn), aluminum (Al), germanium (Ge), lithium (Li), or alloys thereof may be used.

### (Manufacturing method of positive electrode)

For example, a positive electrode slurry may be prepared by mixing the positive electrode active material in a solvent. The positive electrode slurry may be applied to coat the positive electrode current collector, dried, and then rolled to manufacture a positive electrode mixture layer.

The positive electrode mixture layer may further include a binder and may optionally further include a conductive material, a thickener, and the like.

The coating process may be performed by methods, such as gravure coating, slot die coating, multilayer simultaneous die coating, imprinting, doctor blade coating, dip coating, bar coating, and casting, but is not limited thereto.

### (Positive electrode solvent)

A solvent used to prepare the positive electrode slurry may be, but is not limited to, for example, N-methyl-2-pyrrolidone (NMP), dimethylformamide, dimethylacetamide, N,N-dimethylaminopropylamine, ethylene oxide, tetrahydrofuran, and the like.

### Negative electrode

The negative electrode may include a negative electrode current collector and a negative electrode mixture layer formed on at least one surface of the negative electrode current collector.

The negative electrode mixture layer may include a negative electrode active material, a negative electrode conductive material, and a negative electrode binder.

### Negative electrode active material

The negative electrode active material may include a carbon-based active material.

The carbon-based active material is not particularly limited but may include, for example, one or more selected from the group consisting of artificial graphite, natural graphite, and graphitized mesocarbon microbeads.

In embodiments, the carbon-based active material may include artificial graphite alone or may include artificial graphite and natural graphite.

The negative electrode active material may further include a silicon-based active material in addition to the carbon-based active material. The negative electrode active material may include the silicon-based active material having a high discharge capacity, compared to the carbon-based active material, to improve the capacity and energy density of the negative electrode.

The silicon-based active material may be suitably used in the present disclosure as long as it may be commonly used as a negative electrode active material, and the silicon-based active material may include at least one selected from the group consisting of, for example, SiOx (0<x<2), a Si-C composite, and a Si-Y alloy (here, Y is alkali metals, alkaline earth metals, transition metals, Group 13 elements, Group 14 elements, rare earth elements, and combinations thereof). In an embodiment, the silicon-based active material may include SiOx (0<x<2) or a Si-C composite.

In embodiments, the negative electrode active material may include about 1 to about 15 wt% of the silicon-based active material based on the total weight of the negative electrode active material. If the negative electrode active material includes less than about 1 wt% of the silicon-based active material based on the total weight of the negative electrode active material, the content of the silicon-based active material having a high discharge capacity in the negative electrode active material may be small and it may be difficult for the negative electrode to have a sufficiently high capacity and high energy density. If the negative electrode active material includes more than about 15 wt% of the silicon-based active material based on the total weight of the negative electrode active material, the silicon-based active material may not only consume carbon dioxide but also consume electrolytes, thereby lowering the lifespan characteristics and storage characteristics of the secondary battery.

In an embodiment, the negative electrode active material may include about 7 to about 12 wt% of the silicon-based active material based on the total weight of the negative electrode active material. When the negative electrode active material includes about 7 to about 12 wt% of the silicon-based active material based on the total weight of the negative electrode active material, the negative electrode may have sufficiently high capacity and high energy density, thereby implementing a lithium secondary battery having improved lifespan characteristics.

### Negative electrode conductive material

The negative electrode conductive material is used to provide conductivity to the negative electrode and may be used without limitations as long as it is commonly used in secondary batteries. The negative electrode conductive material may include, for example, one or more selected from the group consisting of graphite, carbon black, carbon nanotubes, metal powder, and conductive oxide.

In an embodiment, the negative electrode conductive material may be about 0.05 to about 5 wt% based on the total weight of the negative electrode mixture layer.

### Negative electrode binder

The negative electrode binder may not be particularly limited as long as it is a component assisting in bonding of the negative electrode active material, the negative electrode conductive material, and the like and bonding to the negative electrode current collector. The negative electrode binder may include at least one selected from the group consisting of a rubber-based binder and a water-soluble polymer-based binder.

As the rubber-based binder, a material which is insoluble in aqueous solvents, such as water, but has water dispersibility allowing smooth dispersion in aqueous solvents may be used. For example, the rubber-based binder may include at least one selected from styrene butadiene rubber (SBR), hydrogenated nitrile butadiene rubber (HNBR), acrylonitrile butadiene rubber, acrylic rubber, butyl rubber, and fluoro rubber. Specifically, in terms of ease of dispersion and excellent phase stability, the rubber-based binder may include at least one selected from the group consisting of styrene butadiene rubber and hydrogenated nitrile butadiene rubber, more specifically, styrene butadiene rubber.

In addition, the water-soluble polymer binder that may be dissolved in aqueous solvents, such as water and may include at least one selected from, for example, polyvinyl alcohol (PVA), polyacrylic acid (PAA), polyethylene glycol (PEG), polyacrylonitrile (PAN), polyacryl amide (PAM), and carboxylmethyl cellulose (CMC).

In an embodiment, the amount of the negative electrode binder may be about 1 to about 6 wt% based on the total weight of the negative electrode mixture layer.

### Negative electrode current collector

The negative electrode current collector is commonly used in manufacturing negative electrodes of secondary batteries and may be used without particular limitation as long as it has conductivity without causing chemical changes within the secondary battery. As the negative electrode current collector, copper, stainless steel, aluminum, nickel, titanium, calcined carbon, a negative electrode current collector in which a surface of copper or stainless steel is treated with carbon, nickel, titanium, silver, and the like, and an aluminum-cadmium alloy and the like may be used. In addition, bonding power of the negative electrode active material may be strengthened by forming fine irregularities on the surface, and various forms, such as films, sheets, foils, nets, porous materials, foams, and non-woven fabrics may be used.

### (Manufacturing method of negative electrode)

For example, a negative electrode slurry may be prepared by mixing the negative electrode active material in a solvent. The negative electrode mixture layer may further include a binder and may optionally further include a conductive material, a thickener, and the like.

After coating/depositing the negative electrode slurry on the negative electrode current collector, the negative electrode slurry may be dried and rolled to manufacture a negative electrode mixture layer. The coating process may be performed by methods, such as gravure coating, slot die coating, multilayer simultaneous die coating, imprinting, doctor blade coating, dip coating, bar coating, and casting, but is not limited thereto.

In some embodiments, the negative electrode may include a negative electrode active material layer in the form of lithium metal formed through a deposition/coating process.

### (Negative electrode solvent)

Non-limiting examples of the solvent for the negative electrode mixture may include water, pure water, deionized water, distilled water, ethanol, isopropanol, methanol, acetone, n-propanol, and t-butanol.

### [Separator]

A separator may be interposed between the negative electrode and the negative electrode. The separator may be configured to prevent an electrical short circuit between the positive electrode and the negative electrode and to generate a flow of ions. As an example, a thickness of the separator may be, for example, 10 um to 20 um but is not limited thereto.

For example, the separator may include a porous polymer film or a porous non-woven fabric. The porous polymer film may include polyolefin-based polymers, such as ethylene polymer, propylene polymer, ethylene/butene copolymer, ethylene/hexene copolymer, and ethylene/methacrylate copolymer. The porous non-woven fabric may include high melting point glass fiber, polyethylene terephthalate fiber, and the like. The separator may include a ceramic-based material. For example, inorganic particles may be coated on the polymer film or dispersed within the polymer film to improve heat resistance.

The separator may have a single-layer or multilayer structure including the polymer film and/or non-woven fabric described above.

### [Electrolyte solution]

An electrolyte solution along with the electrode assembly may be accommodated in a battery case to define a lithium secondary battery. According to embodiments, the electrolyte solution may be a non-aqueous electrolyte solution.

### (Lithium salt/organic solvent)

The non-aqueous electrolyte solution may include a lithium salt as an electrolyte and an organic solvent. The lithium salt is expressed, for example, as Li⁺X⁻, and the anions X⁻ of the lithium salt may include, for example, F⁻, Cl⁻, Br , I , NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The organic solvent may include an organic compound having sufficient solubility in the lithium salt and additives and not having reactivity in the battery. The organic solvent may include, for example, at least one of a carbonate-based solvent, an ester-based solvent, an ether-based solvent, a ketone-based solvent, an alcohol-based solvent, and an aprotic solvent. As the organic solvent, for example, propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate, dipropyl carbonate, vinylene carbonate, methyl acetate (MA), ethyl acetate (EA), n-propylacetate (n- PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethyl sulfuroxide, acetonitrile, diethoxyethane, sulfolane, gamma-butyrolactone, propylene sulfite, and the like may be used. These may be used alone or two or more thereof may be used in combination.

### (Additive)

The non-aqueous electrolyte solution may further include additives. The additive may include, for example, a cyclic carbonate-based compound, a fluorine-substituted carbonate-based compound, a sultone-based compound, a cyclic sulfate-based compound, a cyclic sulfite-based compound, a phosphate-based compound, and a borate-based compound.

The cyclic carbonate-based compound may include vinylene carbonate (VC), vinyl ethylene carbonate (VEC), and the like.

The fluorine-substituted cyclic carbonate-based compound may include fluoroethylene carbonate (FEC).

The sultone-based compound may include 1,3-propane sultone, 1,3-propene sultone, 1,4-butane sultone, and the like.

The cyclic sulfate-based compound may include 1,2-ethylene sulfate, 1,2-propylene sulfate, and the like.

The cyclic sulfite-based compound may include ethylene sulfite, butylene sulfite, and the like.

The phosphate-based compound may include lithium difluoro bis-oxalato phosphate, lithium difluoro phosphate, and the like.

The borate-based compound may include lithium bis(oxalate) borate.

As described above, the positive electrode active material may include about 10 wt% or more of lithium metal oxide in the form of single particles based on the total weight of the positive electrode active material, and the negative electrode active material may include 1 to 15 wt% of the silicon-based active material based on the total weight of the negative electrode active material. In detail, the positive electrode active material may include about 10 wt% or more of lithium metal oxide in the form of single particles based on the total weight of the positive electrode active material, so that the occurrence of the gas during charging and discharging of the secondary battery may be reduced to prevent a swelling phenomenon of the secondary battery, thereby improving the lifespan characteristics, storage characteristics, and stability of secondary batteries. In addition, the negative electrode active material may include 1 to 15 wt% of the silicon-based active material based on the total weight of the negative electrode active material and consume the gas to form the SEI layer on the surface of the negative electrode, thereby further preventing swelling of the secondary battery and further improving the lifespan characteristics, storage characteristics, and stability of secondary battery.

### Example

Hereinafter, the present disclosure will be described in more detail through examples. The following example shows an example of the present disclosure and is not intended to limit the present disclosure thereby.

### Examples 1 to 4 and Comparative Examples 1 to 8

A positive electrode slurry was prepared by mixing A1, A2, B1, and B2 as negative electrode active materials, MWCNT as a negative electrode conductive agent, and polyvinylidene fluoride (PVDF) as a negative electrode binder with water as a solvent, applied to an aluminum foil, which is a positive electrode current collector, and then, dried at 80°C to form a positive electrode mixture layer, thereby manufacturing a positive electrode. At this time, the positive electrode slurry includes 98.7 wt% of the positive electrode active material, 0.6 wt% of the positive electrode conductive agent, and 0.7 wt% of the positive electrode binder based on the total weight of the positive electrode slurry.

At this time, A1, A2, B1, and B2 are as follows, respectively.

A1: Positive electrode active material including 10 wt% of LiNi_{0.88}Co_{0.09}Mn_{0.03}O₂ in the form of single particles and 90 wt% of LiNi_{0.88}Co_{0.09}Mn_{0.03}O₂ in the form of secondary particles, based on the total weight.

A2: All Positive electrode active material including LiNi_{0.88}Co_{0.09}Mn_{0.03}O₂ in the form of single particles

B1: Positive electrode active material including 5 wt% of LiNi_{0.88}Co_{0.09}Mn_{0.03}O₂ in the form of single particles and 95 wt% of LiNi_{0.88}Co_{0.09}Mn_{0.03}O₂ in the form of secondary particles, based on the total weight.

B2: All Positive electrode active material including LiNi_{0.88}Co_{0.09}Mn_{0.03}O₂ in the form of secondary particles

Thereafter, a negative electrode slurry was prepared by mixing C1, C2, and D1 as negative electrode active materials, SWCNT as a negative electrode conductive agent, and CMC/SBR as a negative electrode binder with water as a solvent, applied to a copper foil as a negative electrode current collector, and then dried to form a negative electrode mixture layer, thereby manufacturing a negative electrode. At this time, the negative electrode slurry includes 98 wt% of negative electrode active material, 0.1 wt% of negative electrode conductive agent, and 1.9 wt% of negative electrode binder based on the total weight of the negative electrode slurry.

At this time, C1, C2 and D1 are as follows, respectively.

C1: Negative electrode active material including 87 wt% of graphite and 13 wt% of SiOx (0<x<2) with respect to the total weight

C2: Negative electrode active material including 92 wt% of graphite and 8 wt% of SiOx (0<x<2) with respect to the total weight

D1: Negative electrode active material including 78 wt% of graphite and 22 wt% of SiOx (0<x<2) with respect to the total weight

Thereafter, an electrode assembly was manufactured by interposing a polyolefin separator between the positive electrode and the negative electrode and then introduced into a pouch for a secondary battery, an electrolyte solution in which 1M of LiPF₆ was dissolved was injected into a solvent in which ethylene carbonate (EC) and diethyl carbonate (DEC) were mixed and then sealed to manufacture pouch-type lithium secondary batteries of Examples 1 to 4 and Comparative Examples 1 to 8, separately. The pouch-type lithium secondary batteries of Examples 1 to 4 and Comparative Examples 1 to 8 including the positive electrode active materials A1, A2, B1 and B2 and the negative electrode active materials C1, C2 and D1 in different combinations are shown in Table 1 below.

**[Table 1]**

| | Positive electrode active material | Negative electrode active material |
|---|---|---|
| Example 1 | A1 | C1 |
| Example 2 | A1 | C2 |
| Example 3 | A2 | C1 |
| Example 4 | A2 | C2 |
| Comparative Example 1 | A1 | D1 |
| Comparative Example 2 | A2 | D1 |
| Comparative Example 3 | B1 | C1 |
| Comparative Example 4 | B1 | C2 |
| Comparative Example 5 | B1 | D1 |
| Comparative Example 6 | B2 | C1 |
| Comparative Example 7 | B2 | C2 |
| Comparative Example 8 | B2 | D1 |

Evaluation of lifespan characteristics and storage characteristics of lithium secondary batteries

The lifespan characteristics and storage characteristics of each of the pouch-type lithium secondary battery prepared above were evaluated, and the results are shown in Table 2. The method of evaluating the lifespan characteristics and storage characteristics of the lithium secondary batteries is as follows.

### 1) Measurement of capacity retention rate at room temperature

Cycles of the charging (CC/CV 0.3C 4.2V 0.05C CUT-OFF) and discharging (CC 0.5C 2.5V CUT-OFF) were repeatedly performed using the battery cells of Examples 1 to 4 and Comparative Examples 1 to 8 to measure a discharge capacity of each of the lithium secondary batteries. Based on the measured discharge capacities of the lithium secondary batteries, 1/3C CC/CV charging and 0.5C discharging were repeated 1000 times in the range of 4 to 98% of state of charge (SoC) to measure the capacity retention rate of the lithium secondary batteries.

### 2) Measurement of gas vent point

The lithium secondary batteries of Examples 1 to 4 and Comparative Examples 1 to 8 were discharged by 2.5V to 0.3 C at a temperature of 25°C, charged with a constant current to 4.2V, and then charged with a constant voltage up to 1/20 C, which were repeatedly performed, to measure a discharge capacity of each of the lithium secondary batteries. Based on the measured discharge capacities of the lithium secondary batteries, the lithium secondary batteries were introduced into a chamber at 60°C in a 100% state of charge (SoC), and then, the appearance of the lithium secondary batteries were checked by naked eyes to determine gas vent of the lithium secondary batteries. Thereafter, the discharge capacities of the lithium secondary batteries were measured every 4 weeks in the manner as above, and a gas venting time of the lithium secondary batteries was measured at the same time every week, while visually determining whether the lithium secondary batteries were vented.

**[Table 2]**

| | Room temperature capacity retention rate (%) | Measurement of gas vent point (parking) |
|---|---|---|
| Example 1 | 92.5% | 24 |
| Example 2 | 94.1% | 23 |
| Example 3 | 91.1% | Non-occurrence of gas vent |
| Example 4 | 92.2% | Non-occurrence of gas vent |
| Comparative Example 1 | 82.6% | 26 |
| Comparative Example 2 | 80.1% | Non-occurrence of gas vent |
| Comparative Example 3 | 93.1% | 16 |
| Comparative Example 4 | 94.4% | 15 |
| Comparative Example 5 | 84.6% | 18 |
| Comparative Example 6 | 93.5% | 12 |
| Comparative Example 7 | 95.2% | 12 |
| Comparative Example 8 | 86.8% | 14 |

As can be seen from Table 2, it was confirmed that the lithium secondary batteries of Comparative Examples 1, 2, 5, and 8 had a room temperature capacity retention rate of 86.8% or less. That is, it was confirmed that the lithium secondary batteries of Comparative Examples 1, 2, 5, and 8 had a low room temperature capacity retention rate. These results show that the lithium secondary batteries of Comparative Examples 1, 2, 5, and 8 included a negative electrode active material including 78 wt% of graphite and 22 wt% of SiOx (0<x<2) based on the total weight of the negative electrode active material, that is, included a negative electrode active material including a large amount of silicon-based active material, and thus, the large amount of silicon-based active material consumes the electrolyte solution.

In addition, it was confirmed that gas venting occurred in the lithium secondary batteries of Comparative Examples 3 to 5 at 15 to 18 weeks. In addition, it was confirmed that gas venting occurred in the lithium secondary batteries of Comparative Examples 6 to 8 at 12 to 14 weeks. That is, it was confirmed that the lithium secondary batteries of Comparative Examples 3 to 8 had a short gas venting time. These results show that the lithium secondary batteries of Comparative Examples 3 to 5 included the positive electrode active material B1 including 5 wt% of LiNi_{0.88}Co_{0.09}Mn_{0.03}O₂ in the form of single particles and 95 wt% of LiNi_{0.88}Co_{0.09}Mn_{0.03}O₂ in the form of secondary particles, based on the total weight of the positive electrode active material and the lithium secondary batteries of Comparative Examples 6 to 8 included the positive electrode active material B2 including LiNi_{0.88}Co_{0.09}Mn_{0.03}O₂ in the form of secondary particles, that is, the lithium secondary batteries of Comparative Examples 3 to 8 included a positive electrode active material including a large amount of lithium metal oxide in the form of secondary particles, so that a large amount of gas was determined to occur due to the occurrence of cracks of the large amount of lithium metal oxide in the form of secondary particles during charging and discharging of the lithium secondary batteries.

In contrast, the lithium secondary batteries of Examples 1 to 4 had a room temperature capacity retention rate of 91.1% or more, and it was confirmed that gas venting occurred or no gas venting occurred after 23 weeks or more. That is, it was confirmed that the lithium secondary batteries of Examples 1 to 4 had a long gas venting time or did not generate gas venting, while obtaining a high room temperature capacity retention rate.

In addition, it was confirmed that the lithium secondary batteries of Comparative Examples 1 to 8 had a short gas venting time although they have a high room temperature capacity maintenance rate, or had a low room temperature capacity retention rate, although they have a long gas venting time, whereas it was confirmed that the lithium secondary batteries of Examples 1 to 4 had a high room temperature capacity retention rate and a long gas venting time or non-occurrence of gas vent.

These results show that the lithium secondary batteries of Examples 1 to 4 included A1 or A2 as the positive electrode active material and C1 or C2 as the negative electrode active material, so that it is determined that the occurrence of the gas was reduced during charging and discharging of the lithium secondary batteries and the silicon-based negative electrode active material consumed gas but did not consume the electrolyte solution. From this, the lithium secondary battery of the present disclosure included a positive electrode active material including 10 wt% or more of lithium metal oxide in the form of single particles based on the total weight of the positive electrode active material and a negative electrode active material including 1 to 15 wt% of silicon-based active material based on the total weight of the negative electrode active material, so that the occurrence of gas was reduced during charging and discharging of the lithium secondary battery, thereby preventing swelling of the secondary battery, and thus, it is determined that the lifespan characteristics, storage characteristics, and stability of secondary batteries were improved. In addition, it can be seen that the negative electrode active material included 1 to 15 wt% of the silicon-based active material based on the total weight of the negative electrode active material to consume the gas to form the SEI layer on the surface of the negative electrode, thereby further preventing swelling of the secondary battery, and therefore, the lifespan characteristics, storage characteristics, and stability of the secondary battery were further improved.

In the lithium secondary battery according to embodiments of the present disclosure, the occurrence of the gas may be reduced during charging and discharging of the secondary battery to prevent swelling of the secondary battery, and thus, the lifespan characteristics, storage characteristics, and stability of the secondary battery may be improved.

The lithium secondary battery of the present disclosure may be widely applied in green technology fields, such as electric vehicles, battery charging stations, and solar power generation and wind power generation using batteries. In addition, the lithium secondary battery of the present disclosure may be used in eco-friendly electric vehicles, hybrid vehicles, and the like to prevent climate change by suppressing air pollution and greenhouse gas emissions.

While the present invention has been particularly shown and described with reference to exemplary embodiments thereof, it will be understood by those of ordinary skill in the art that various changes in form and details may be made therein without departing from the spirit and scope of the present invention as defined by the following claims.

The particular implementations shown and described herein are illustrative examples of the invention and are not intended to otherwise limit the scope of the invention in any way. Moreover, no item or component is essential to the practice of the invention unless the element is specifically described as "essential" or "critical."

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein.

Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those skilled in this art without departing from the spirit and scope of the present invention.

## Claims

1. A lithium secondary battery comprising:
a positive electrode including a positive electrode active material including lithium metal oxide including nickel (Ni); and
a negative electrode including a negative electrode active material including a silicon-based active material,
wherein the positive electrode active material includes 10 wt% or more of lithium metal oxide in the form of single particles based on a total weight of the positive electrode active material, and
the negative electrode active material includes 1 to 15 wt% of the silicon-based active material based on a total weight of the negative electrode active material.

2. The lithium secondary battery of claim 1, wherein the lithium metal oxide is represented by Chemical Formula 1 below:
[Chemical Formula 1] LiₓNiₐCo_{b}Mn_{c}M_{d}O_{2+y}
where M is one or more selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, wherein 0.8≤x≤1.5, -0.1≤y≤0.1, 0.83≤a≤1, 0≤b≤0.1, 0≤ c≤0.1, 0≤d≤0.1, and a+b+c+d=1.

3. The lithium secondary battery of claim 2, wherein the lithium metal oxide is coated or doped with at least one selected from the group consisting of Al, Ti, Ba, Zr, Si, B, Mg, P, V, W, alloys thereof, and oxides thereof.

4. The lithium secondary battery of claim 1, wherein the silicon-based active material includes SiOx (0<x<2) or SiC complex.

5. The lithium secondary battery of claim 1, wherein the negative electrode active material includes 7 to 12 wt% of the silicon-based active material based on the total weight of the negative electrode active material.

6. The lithium secondary battery of claim 1, wherein the negative electrode active material further includes a carbon-based active material.

7. The lithium secondary battery of claim 1, further comprising a separator interposed between the positive electrode and the negative electrode.

8. A lithium secondary battery comprising:
a positive electrode including lithium metal oxide in the form of single particles and including a positive electrode active material represented by Chemical Formula 1 below; and
a negative electrode including a negative electrode active material including a silicon-based active material,
wherein the negative electrode active material includes 1 to 15 wt% of the silicon-based active material based on a total weight of the negative electrode active material.
[Chemical Formula 1] LiₓNiₐCo_{b}Mn_{c}M_{d}O_{2+y}
where M is one or more selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, wherein 0.8≤x≤1.5, -0.1≤y≤0.1, 0.83≤a≤1, 0≤b≤0.1, 0≤ c≤0.1, 0≤d≤0.1, and a+b+c+d=1.

9. The lithium secondary battery of claim 8, wherein the positive electrode active material includes 10 wt% or more of lithium metal oxide in the form of single particles based on a total weight of the positive electrode active material.

10. The lithium secondary battery of claim 8, wherein the lithium metal oxide is coated or doped with at least one selected from the group consisting of Al, Ti, Ba, Zr, Si, B, Mg, P, V, W, alloys thereof, and oxides thereof.

11. The lithium secondary battery of claim 8, wherein the silicon-based active material includes SiOx (0<x<2) or SiC complex.

12. The lithium secondary battery of claim 8, wherein the negative electrode active material includes 7 to 12 wt% of the silicon-based active material based on the total weight of the negative electrode active material.

13. The lithium secondary battery of claim 8, further comprising a separator interposed between the positive electrode and the negative electrode.
